**Europäisches Patentamt**

**European Patent Office**

**Office européen des brevets**

(19)

(11) Veröffentlichungsnummer : **0 195 932**
**B1**

(12) # EUROPÄISCHE PATENTSCHRIFT

(45) Veröffentlichungstag der Patentschrift :
09.11.88

(51) Int. Cl.⁴ : **H 02 G 1/12**

(21) Anmeldenummer : **86102147.5**

(22) Anmeldetag : **19.02.86**

(54) **Abisoliervorrichtung.**

(30) Priorität : **22.02.85 CH 815/85**

(43) Veröffentlichungstag der Anmeldung :
**01.10.86 Patentblatt 86/40**

(45) Bekanntmachung des Hinweises auf die Patenterteilung : **09.11.88 Patentblatt 88/45**

(84) Benannte Vertragsstaaten :
**BE CH DE FR GB IT LI NL SE**

(56) Entgegenhaltungen :
**FR-A- 2 480 513**
**SU-A- 1 069 050**
**US-A- 2 645 959**
**US-A- 2 671 363**
**US-A- 3 838 612**
**US-A- 3 881 374**

(73) Patentinhaber : **Stepan, Jiri**
**St. Gallerstrasse 76**
**7320 Sargans (CH)**

(72) Erfinder : **Stepan, Jiri**
**St. Gallerstrasse 76**
**7320 Sargans (CH)**

(74) Vertreter : **Büchel, Kurt F., Dr.**
**Patentanwalt Dr. Kurt F. Büchel Bergstrasse 297**
**FL-9495 Triesen (LI)**

EP 0 195 932 B1

## Beschreibung

Die Erfindung bezieht sich auf eine Vorrichtung zum Entfernen wenigstens einer Lage der Ummantelung von elektrischen Leitern oder Lichtleitern, wie sie z. B. aus der US-A-3881374 bekannt geworden ist. Die Zentrierbacken haben dort eine prismatische Haltefläche, in die das mit den Zentrierbacken fest verbundene Messer hineinragt; des weiteren sind die Zentrierbacken — vom Ende des Leiters her gesehen — vor dem Messer angeordnet. Eine solche Konstruktion besitzt aber schwerwiegende Nachteile : Sie lässt sich jeweils nur für einen einzigen Durchmesser des Leiters und für eine einzige Abisolierstufe einstellen und muss für andere Durchmesser und/oder jede weitere Stufe jeweils umständlich neu eingestellt werden. Die prismatischen Flächen verunmöglichen die Verwendung der Vorrichtung für einen grösseren Durchmesserbereich der Leiter.

Andererseits wurde auch schon früher (US-A-2 645.959) eine Abisoliervorrichtung vorgeschlagen, bei der zwar die Zentrierbacken durch eine Büchse ersetzt sind, die radial nicht verschiebbar ist, in die der Leiter von Hand eingeführt werden muss und die jeweils auch nur für eine Stufe passt ; andererseits sind dort unmittelbar neben dem Messer axial federnd gelagerte Verdrillbacken angeordnet, die aber wiederum nicht als Zentrierbacken dienen können, da beim Eindringen der Messer in das Material durch dessen Verdrängung die Federn zurückgedrückt werden.

Die Erfindung hat sich nun zur Aufgabe gestellt, eine solche Abisoliervorrichtung zu schaffen, die möglichst universell für die verschiedensten Durchmesser und/oder für mehrstufige Abisoliervorgänge eingesetzt werden kann, und bei der trotzdem der Leiter während des Schnittvorganges unmittelbar neben dem Messer radial unausweichlich gehalten ist. Dies gelingt durch die Kombination der in Anspruch 1 angegebenen Massnahmen, wobei bevorzugte Ausführungsformen in den Kennzeichen der abhängigen Ansprüche beschrieben sind.

Nun beschreibt zwar auch schon die FR-A-2 480 513 eine Betätigungsvorrichtung für die Abisoliermesser, die aber ohne Veränderung der Mechanik nicht auf verschiedenste Durchmesser einstellbar ist. Dort werden die Abisoliermesser nicht formschlüssig oder durch einen Regelmechanismus auf eine exakte Schneidtiefe geführt.

Für die Realisierung unterschiedlicher Abisolierlängen für mehrstufiges Abisolieren genügt auch nicht ein fester Anschlag wie beim Gegenstand des US-A-2 671 363, sondern es bedarf zumindest eines verstellbaren Anschlags oder einer Vorschub- bzw. Rückzugseinrichtung für die Abisoliermesser.

Nur wenn die Zentrierbacken radial bewegbar sind, ist die Vorrichtung für verschiedene Leiterdurchmesser verwendbar ; nur wenn die Messer unabhängig von den Zentrierbacken radial bewegbar sind, ist die Vorrichtung für verschiedene Schnittiefen verwendbar, was eine wesentliche Voraussetzung für mehrstufiges Abisolieren ist. Erst wenn trotz dieser Beweglichkeit die Zentrierbacken in Schnittstellung formschlüssig in Anlage gehalten sind, wird die ansonsten unvermeidliche Vibration des Leiters verhindert, die eine exakte Schnittführung erschwert oder verunmöglicht. Auch die Messer sind natürlich formschlüssig zwangsgeführt, um die Schnittgenauigkeit zu gewährleisten. Die Anordnung der Zentrierbacken hinter den Messern erlaubt ein exaktes Arbeiten auch bei sehr kleinen Schnittlängen.

Die Halteflächen der Zentrierbacken sollen nur dann leicht konkav gekrümmt sein, wenn die Krümmung nicht dazu führt, dass Leiter besonders kleinen Durchmessers nicht mehr zwischen den Halteflächen fixiert werden können. Gegebenenfalls müssen sie so schmal oder axial gegeneinander um die Materialstärke versetzt sein, dass sie ihrer Aufgabe auch für kleine Leiterdurchmesser gerecht werden können.

Weil der Leiter bei grösseren Längen zwischen den Zentrierbacken Ausrolltendenz hat, ist die Haltefläche der Zentrierbacken in der Drehrichtung zuerst mit glatter, dann kurz nach der Mitte mit verzahnter oder rauher Fläche ausgebildet. Die Zentrierbacken sollen leicht, aber ohne Nachgeben an der Oberfläche des Leiters anliegen.

Anstelle einer Feder für die axiale Betätigung der Zentrierbacken kann auch eine magnetische, fluidische oder eine Gewichtsbeaufschlagung vorgesehen sein. Ueber die Schrägflächen ist nach der kraftschlüssigen Anlage an den Leiter eine formschlüssige Beibehaltung der Position der Zentrierbakken an der Leiteroberfläche gewährleistet (selbsthemmende Wirkung des Keiles).

Ausserdem ist es zweckmässig, wenn der Drehantrieb und/oder die axiale Betätigung des Messers und der Zentrierbacken gemeinsam vorgesehen ist (sind). Ein Drehschnitt liefert einerseits unabhängig vom Zustande des Messers, also eventuellen kleinen Scharten, einen einwandfreien und exakten Schnitt ; anderseits wird die Konstruktion vereinfacht, wenn ein einziger Antrieb für beide Teile vorgesehen wird. Schliesslich aber wird durch das Mitdrehen der Zentrierbacken erreicht, dass diese während der Drehung des Messers stets in dessen unmittelbarer Nähe verbleiben können, was wiederum im Interesse einer grösseren Genauigkeit des Schnittes von Vorteil ist.

Ausserdem soll zweckmässigerweise der Abstand der Schneidelinie des Messers von der dem Messer zugewandten Seite der Zentrierbacken maximal dem Durchmesser des Leiters entsprechen, vorzugsweise maximal das 0,1 bis 0,5 fache des Leiterdurchmessers betragen. Dann wird nämlich der Leiter so kurz gehalten, dass er sich nicht verbiegen kann, auch wenn das Messer beispielsweise über eine Lage von Abschirmdrähten auszuweichen versuchen sollte. Dadurch wird

ferner sichergestellt, dass der Leiter beim Einschneiden durch das Messer nicht ausweichen, bzw. sich verbiegen kann, so dass ein ungleich tiefes Eindringen der Messer — bezogen auf die Achse des Leiters — vermieden wird.

Eine sehr wesentliche Aufgabe kommt im Rahmen der gegenständlichen Erfindung auch dem Anschlag zu. Nach der US-A-3.881.374 ist überhaupt kein Anschlag vorgesehen, nach der US-A-2.645.959 ist dieser verstellbar gegenüber den Messern. Nach der Erfindung liegt er aber beim Einführen des Leiters immer in derselben Position, nämlich z. B. in der Nullage der Messer. Dann fassen die Spannbacken den eingeführten Leiter, der Anschlag fährt zurück und die Messer und Zentrierbacken gehen in die vorprogrammierte Position der Schnittlänge. Der Messerkopf fährt immer nur die notwendigste Länge, die noch verkürzt werden kann, wenn die Nullage der Messer sich in der Mitte zwischen dem Leiterende und der grössten Abisolierlänge befindet.

Für die radiale Fixierung der Zentrierbacken soll wenigstens eine, z. B. von einem Keil oder Konus gebildete, axial verschiebbare Schrägfläche vorgesehen sein ; es wird jedoch eine axialsymmetrische Anordnung mehrerer solcher Schrägflächen bevorzugt sein. Dadurch ist gesichert, dass die Verbindung zwischen Keilfläche und Hebel einen zwangsläufig wirkenden Formschluss ergibt, wenn der jeweilige Teil gegen die Oberfläche des Leiters geführt werden soll, wogegen das Abheben von dieser Oberfläche kraftschlüssig erfolgen mag, soferne die Keilfläche nicht durch eine formschlüssig wirkende Nut gebildet ist, in die ein Nockenfolgerstift am Ende des Armes eingreift. Ueberdies kann ein weiterer Keil od. dgl. zur Betätigung des Messers vorgesehen sein, und zwar insbesondere dann, wenn die Betätigunseinrichtung wenigstens zum Teil den Zentrierbacken und dem Messer gemeinsam ist.

Da Zentrierbacken und Messer möglichst eng aneinander angeordnet werden sollen, ist es vorteilhaft, wenn die Hebel in unmittelbar nebeneinander liegenden, gegebenenfalls koaxialen Drehlagern angeordnet sind, um ihnen auch möglichst parallel zueinander verlaufende Bewegungsbahnen zuzuordnen, damit sie einander in ihrer Bewegung nicht behindern. Zu diesem Zwecke kann es günstig sein, wenn Zentrierbacken und Messer an in zueinander etwa parallelen, gegebenenfalls koaxialen (also gekrümmten), Ebenen angeordneten Trägern angeordnet sind. Die Parallelität kann dabei selbstverständlich nur « etwa » gegeben sein, da sich ja die beiden Teile relativ zueinander bewegen und dabei jedenfalls geringfügig aus einer streng parallelen Lage gelangen werden, und überdies natürlich kleine Toleranzen zulässig sind.

Weitere Einzelheiten ergeben sich an Hand der nachfolgenden Beschreibung eines in der Zeichnung schematisch dargestellten Ausführungsbeispieles. Es zeigen :

Fig. 1 ein Strichschema eines Ausführungsbeispieles einer solchen Vorrichtung, von der

Fig. 2 den linken Teil in betätigter Stellung veranschaulicht ;

Fig. 3 eine axonometrische Darstellung einer weiteren, in Fig. 1 weggelassenen Einzelheit ;

Fig. 4 eine Stirnansicht auf die Zentrierbacken, mit einem Schnitt durch ein abzuisolierendes Koaxialkabel ; und

die Fig. 5a und 5b eine besondere Ausführungsform der erfindungsgemässen Kombination eines Messers und einer Zentrierbacke, und zwar Fig. 5a im Längsschnitt entlang der Linie B-B' aus Fig. 5b, bzw. Fig. 5b im Querschnitt entlang der Linie A-A' aus Fig. 5a.

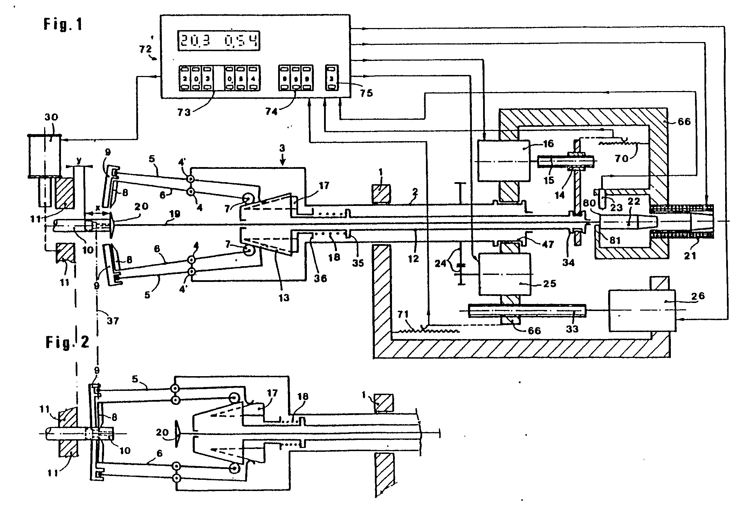

Gemäss Fig. 1 ist in einem Ständer 1 eine Hohlwelle 2 gelagert, die am linken Ende einen Abisolierkopf 3 trägt. Am Kopf 3 sind je ein Paar von einander gegenüberliegenden zweiarmigen starren Hebeln 5 bzw. 6. in Drehlagern 4, 4' gelagert.

Während die Hebel 5 mit ihrem rechten Ende sich mit Gleitbügeln an einer Betätigungsschrägfläche abstützen, die hier an einem koaxial zur Hohlwelle 2 in Achsrichtung verschiebbaren Keil 17 ausgebildet ist (strichliert angedeutet), liegen die rechten Enden der Hebel 6 mittels Rollen 7 an einem ähnlichen Doppelkeil oder Kegelstumpf 13. An diesen Schrägflächen liegen der Bügel, bzw. die Rolle entweder unter dem Eigengewicht oder unter der Wirkung einer nicht dargestellten Feder an. Selbstverständlich können auch entlang der Schrägflächen verlaufende Nuten vorgesehen sein, in denen Nockenfolgerstifte oder -rollen von der Seite her eingreifen, und so die Hebel 5, 6 (oder nur einen von ihnen) zwangsläufig führen.

Die Steuerung der Vorrichtung erfolgt über einen Digitalcontroller 72 mit einer Tastatur 73 für die Einstellung der Abisolierlängen und Einschneidetiefen, und einer Tastatur 74 für die Speicheradressen dieser Werte, sowie mit einem Wähler 75 für die Einstellung der gewünschten Stufenzahl der Abisolierung eines Leiters. Natürlich könnte die Positionierung der Zentrierbacken 9 und der Messer 8 auch mittels DC-Motoren mit Entcoder statt eines Potentiometers, oder mittels Schrittmotoren realisiert werden.

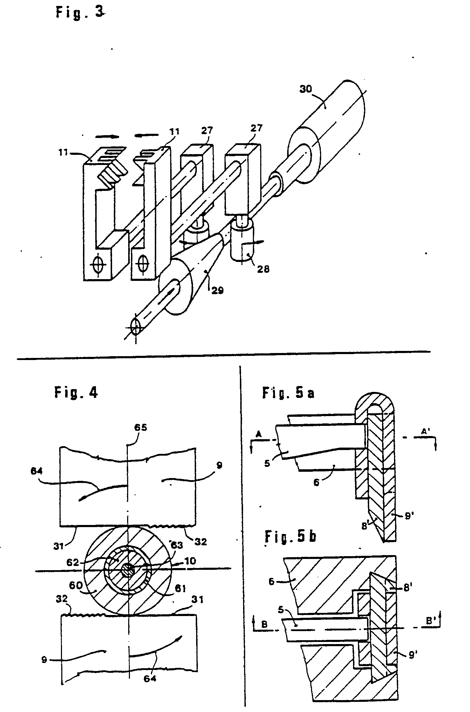

Um die Zentrierbacken 9 und die Messer 8 aus der Lage gemäss Fig. 1 in diejenige nach Fig. 2 zu bringen, ist eine Betätigungseinrichtung für die Keile 13, 17 vorgesehen, die ein Schubrohr 12 aufweist. Dieses ist an seinem rechten Ende in einem Spurlager 34 gelagert, das mit einem Innengewindeteil 14 verbunden ist. In diesem ist eine Spindel 15 verschraubt, die von einem Motor 16 antreibbar ist, um den Innengewindeteil 14 entlang der Spindel 15 und damit das Schubrohr 12 axial zu verschieben.

Auch der Keil 17 wird durch das Schubrohr 12 betätigt. Zweckmässig besitzt der Doppelkeil 13 eine oder zwei sich in Achsrichtung erstreckende Ausnehmungen, in denen der Keil 17 verschiebbar ist. Da aber die Zentrierbacken 9 sich nur an die isolierte Oberfläche des Leiters 10 anzulegen brauchen, wogegen die Messer 8 in die Isolationsschicht und eine allfällige Abschirmung eindringen müssen, somit diese beiden Teile 8, 9 eine Relativbewegung in radialer Richtung auszuführen haben, ist es zweckmässig, wenn die Betätigung des Keiles 17 kraftschlüssig erfolgt, was sich unabhängig von der gemeinsamen Betätigung auch im Hinblick auf Toleranzen der weichen Isolationsoberfläche des Leiters 10 empfiehlt.

Zu diesem Zwecke weist das Schubrohr 12 einen Bund 35 auf, an dem sich ein Ende einer Feder 18 abstützt, deren anderes Ende an einem Flansch 36 des Keiles 17 anliegt. Dagegen ist das Schubrohr 12 mit dem Doppelkeil 13 starr verbunden, so dass dieser in eine voreingestellte Position vorgeschoben werden kann, während sich die Zentrierbacken 9 bereits an die Isolationsoberfläche des Leiters 10 angelegt haben und sich daher einer weiteren Axialverschiebung des Keiles 17 widersetzen. Dabei wird der Bewegungsunterschied durch Zusammenpressen der Feder 18 aufgefangen. Es versteht sich aber, dass an Stelle der Feder auch jede beliebige Ausgleichvorrichtung vorgesehen sein kann, die eine kraftschlüssige Anlage der Zentrierbacken 9 an der isolierten Oberfläche des Leiters 10 ergibt, beispielsweise auch ein Luftkissen, das etwa durch ein Zylinder-Kolben-Aggregat gebildet sein kann.

Wird nun das Schubrohr 12 durch den Antrieb 14-16 nach links bewegt, so ist ersichtlich, dass die Schrägflächen der Keile 13, 17 zwangsläufig bzw. formschlüssig auf die Hebel 5, 6 einwirken, die somit aus der Lage nach Fig. 1 in diejenige nach Fig. 2 schwenken. Dies wird dadurch erreicht, dass die Hebel 5, 6 zweiarmig sind, weil andernfalls entweder nur eine kraftschlüssige Bewegung unter der Wirkung einer (entsprechend stark bemessenen) Feder oder eben eine formschlüssige Bewegung durch eine Nuten- oder Schlitzführung erreichbar wäre, was baulich einen grösseren Platzaufwand bedingen würde.

Aus Fig. 1 ist schliesslich noch ein weiterer Antrieb mit einem Motor 25 ersichtlich, der über ein Zahnräderpaar 24 die Welle 2 und damit den Kopf 3 zu einer Drehung antreibt, um mit Hilfe der Messer 8 einen Drehschnitt durch die Isolation bzw. die Abschirmung des Leiters 10 ausführen zu können. An sich genügt dabei eine einzige Umdrehung der Welle 2, obwohl es gegebenenfalls erwünscht sein mag, die Drehbewegung zu unterbrechen, während die mittlere Schicht abgezogen wird.

Wie aus Fig. 3 hervorgeht, sitzen die Spannbacken 11 auf Hebeln 27, die mit Nockenfolgerrollen 28 verbunden sind. Auch hier sind wieder keilförmige Nockenflächen an einem Kegel 29 vorgesehen, an dem die Rollen 28 unter der Wirkung einer nicht dargestellten Belastungseinrichtung, wie einer zwischen ihnen gespannten Zugfeder, anliegen. Wird daher der Kegel 29 durch einen Magneten 30 angezogen, so kommt er mit seinem grösseren Durchmesser zwischen die beiden Rollen 25 zu liegen und zwingt diese im Sinne der aus Fig. 3 ersichtlichen Pfeile auseinander bzw. die Spannbacken 11 zusammen. Auch hier erfolgt demnach die gegeneinander gerichtete Bewegung der Spannbacken 11 formschlüssig unter dem Drucke des Kegels 29, wogegen die Oeffnungsbewegung der Spannbacken kraftschlüssig unter der Wirkung der nicht dargestellten Belastungseinrichtung bzw. Feder geschieht. Selbstverständlich kann an Stelle des Magneten 30 dabei auch jeder andere motorische Antrieb, etwa durch eine über einen Motor antreibbare Spindel, Verwendung finden.

Die erfindungsgemässe Vorrichtung arbeitet nun wie folgt:

Die gewünschten Abisolierlängen und Einschneidtiefen werden im Digitalcontroller 72 gespeichert. Sie können durch Einschieben des Leiters 10 zwischen den geöffneten Spannbacken 11 bis zum Anschlag 20 abgerufen werden. Dieser verschiebt über die Stange 19, die entlang der Drehachse der Vorrichtung verläuft, das Endstück 22 so, dass seine Kante 80 vom Sensor 23 abgetastet wird. Das Signal des Sensors 23 wird im Digitalcontroller 72 verarbeitet und bewirkt den Ablauf folgender Verfahrensschritte:

1. Der Magnet 30 wird unter Strom gesetzt, wodurch die Spannbacken 11 geschlossen werden, und zwar über die Kegel 29, Rollen 28 und Hebel 27 (Fig. 3). Durch die prismatisch ausgebildeten Spannflächen der Backen 11 wird der Leiter 10 mit grosser Genauigkeit zur Drehachse zentriert eingespannt.

2. Danach wird der Anschlag 20 über die Stange 19 mit dem Endstück 22 in den Tauchmagneten 21 nach rechts aus dem Arbeitsraum zurückgezogen.

3. Anschliessend wird der Motor 26 angesteuert, wodurch die Schneidelinie der Messer 8 über die Spindel 33, den Rahmen 66, das Spurlager 47, die Hohlwelle 2 und den Hebel 6 in die erste Abisolierposition 37 gebracht werden. Diese Lage wird durch das Potentiometer 71 kontrolliert.

4. Nach Erreichen dieser Position wird der Motor 25 unter Strom gesetzt und bringt den Kopf 3 mit den Messern 8 und den Zentrierbacken 9 über das Zahnräderpaar 24 in Rotation.

5. Gleichzeitig wird der Motor 16 angesteuert, damit die Messer 8 über die Teile 4, 6, 7, 12-15 und das Spurlager 34 in die vorprogrammierte Einschneidtiefe gebracht werden. Bei diesem Schliessvorgang bewegen sich auch die Zentrierbacken 9 über 5, 4', 17, 18, 35 und 36 bis zur Leiteroberfläche und zentrieren den Leiter 10 nunmehr unmittelbar im Bereich des vorgesehenen Schnittes. Beim ersten leichten Widerstand durch das Anliegen der Zentrierbacken 9 an der Oberfläche des Leiters 10 wird die Bewegung des Keils 17 durch die Hebel 5 gebremst; die Feder 18 wird zusammengedrückt, weil das Schubrohr 12 immer noch in Bewegung ist, und zwar solange, bis die voreingestellte Einschneidtiefe in den Leiter 10 erreicht ist (Fig. 2). Diese Position wird durch das Potentiometer 70 kontrolliert. Durch die Rotation der Messer 8 werden die zur Abisolierung vorgesehenen Lagen kreisförmig durchtrennt.

Das Aufliegen der Zentrierbacken 9 und das zentrische Festhalten des Leiters 10 direkt neben den Messern 8 bewirkt auch, dass der Leiter 10 beim Abisolieren nicht wegen Vibrationen oder wegen des Ueberspringens eines Messers über Abschirmungsreste ungleich tief, d. h. durch ein Messer des Messerpaares in Bezug auf die Achse tiefer als durch das andere Messer eingeschnitten werden kann.

6. Nach Erreichen der voreingestellten Einschneidtiefe wird der Motor 26 über den Digitalcontroller 72 so angesteuert, dass er in entgegengesetzter Richtung wie vorher den Kopf 3 axial zurückzieht und dabei die abgetrennte Lage abzieht.

7. Anschliessend werden durch Ansteuerung des Motors 16 in umgekehrter Weise wie vorher die Messer 8 und Zentrierbacken 9 wieder geöffnet.

8. Es werden nun für jede der geplanten Stufen die oben beschriebenen Verfahrensschritte 3 bis 7 wiederholt.

9. Zum Schluss werden die Magnete 21 und 30 ausgeschaltet, wodurch die Spannbacken 11 geöffnet werden ; der Leiter 10 wird losgelassen ; der Anschlag 20 springt, z. B. durch die Kraft einer nicht dargestellten Feder, zurück, bis die Kante 80 des Endstückes 22 wieder auf der Fläche 81 aufsitzt. Damit ist die Vorrichtung bereit für den nächsten Abisoliervorgang.

Nach dem Abrufen des gewünschten Programmes durch die Tastatur 74 stellt sich der Kopf 3 mit den Messern 8 und dem Anschlag 20 automatisch in die Ausgangsposition, die durch die grösste Abisolierlänge x dieses Programmes, und den notwendigen Abstand (der in Fig. 1 mit y bezeichnet ist) zwischen den Haltezangenbacken 9 und den Spannbacken 11 gegeben ist, der sicherstellt, dass die Haltezangenbacken 9 beim Schliessen nicht die Spannbacken 11 berühren und der Anschlag 20 immer zwischen der Messerlinie liegt. Diese Anordnung garantiert, dass der Abisolierkopf nur die absolut notwendigen Wege in Axialrichtung macht, was bezüglich der Abnützung und Arbeitsgeschwindigkeit von grosser Bedeutung ist.

Die Wirkung der Zentrierbacken 9 soll sich zweckmässig nicht nur dahingehend erstrecken, dass der Leiter 10 von oben und unten (bezogen auf Fig. 1) gegen die Mitte zentriert wird. Eine seitliche Zentrierung ist besonders beim Drehschnitt ebenfalls erwünscht. Da aber Leiter unterschiedlichen Durchmessers abisoliert werden sollen, wird es für viele Anwendungen nicht etwa genügen, die Zentrierbacken 9 mit Prismenflächen analog zu den Spannbacken (vgl. Fig. 3) zu versehen. Die bevorzugte Ausführung ist nun in Fig. 4 dargestellt. Dabei weist der Leiter 10 eine äussere Isolationsschicht 60, eine Abschirmung 61 und ein Dielektrikum 62 auf, die den Leitungsdraht 63 umgeben. Da nun die Messer 8 zu den Zentrierbacken 9 im wesentlichen parallel liegen, kann es während der Durchführung des Drehschnittes leicht zum seitlichen Ausrollen des Leiters zwischen den einander zugekehrten Flächen 31, 32 der Zentrierbacken 9 kommen, wenn dagegen nicht zusätzliche Massnahmen ergriffen werden. Dieser unerwünschte Effekt kann verhindert werden, wenn die einander zugekehrten Greifflächen 31, 32 in Drehungsrichtung (Pfeile 64) der Zentrierbacken 9 vorne einen im wesentlichen glatten Flächenabschnitt 31 besitzen, dem ein rauher, vorzugsweise gezahnter Flächenabschnitt 32 folgt. Die Zähne erstrecken sich quer zur Drehrichtung 64 bzw. parallel zur Längsachse des Leiters 10. Es hat sich als zweckmässig erwiesen, den glatten Abschnitt 31 von einer Seite der Zentrierbacke 9 her bis über deren Längsachse 65 bzw. über eine diese Achse 65 und die Längsachse des Leiters 10 durchquerende Ebene hinaus zu erstrecken. Dadurch wird der Leiter 10 im dargestellten zentrierten Zustande von der glatten Fläche 31 gehalten, sofort aber von den Zähnen des Abschnittes 32 erfasst, sobald er nur die geringste Tendenz zum seitlichen Ausweichen bzw. Abrollen zeigt.

Gemäss Fig. 5 ist das Messer 8' — abgesehen von der Schneide — im Querschnitt U-förmig ausgebildet, und umgreift den einen Schenkel der ebenfalls, jedoch im Längsschnitt, U-förmig ausgebildeten Zentrierbacke 9', in deren anderem Schenkel der Hebel 5 gelagert ist. Das Messer 8' seinerseits ist durch seine schwalbenschwanzförmige Aussenform im Hebel 6 gehalten. Die Zentrierbacke 9' gleitet in der Aussparung des Messers 8'.

**Patentansprüche**

1. Vorrichtung zum Entfernen wenigstens einer Lage (60-62) der Ummantelung von elektrischen Leitern oder Lichtleitern (10),

- mit einem Anschlag (20) für den herangeführten Leiter (10),

- mit wenigstens einem um die Achse des Leiters (10) drehbaren Abisoliermesser (8) zum Durchtrennen der wenigstens einen ihn umhüllenden Lage (60-62),

- mit einer Betätigungsvorrichtung (14-16, 34), die das (die) Abisoliermesser (8) über eine erste konische Schrägfläche (13) formschlüssig zwangsgeführt auf die gewünschte Schneidtiefe einstellt, wobei

- der Leiter (10) mit Hilfe von unmittelbar neben dem (den) Messer(n) (8) angeordneten Zentrierbacken (9), die durch eine kraftschlüssig wirkende Betätigungseinrichtung (18, 17, 5) radial in Anlage an die Ummantelung des Leiters (10) bringbar sind, zentriert fixierbar ist ;

- die Zentrierbacken (9) in der an den Leiter (10) angelegten Stellung durch wenigstens eine zweite konische Schrägfläche (17) formschlüssig fixierbar sind ;

- das (die) Abisoliermesser (8) wenigstens auf dem folgenden Teil ihres radialen Weges unabhängig von den solchermassen fixierten Zentrierbacken (9) bewegbar ist (sind) ;

- eine Vorschub-, bzw. Rückzugseinrichtung (26, 33, 47) für das (die) Messer (8) und die Zentrierbacken (9) auf die jeweils gewünschte Abisolierlänge einstellbar ist ;

- Spannbacken (11) vorgesehen sind, um das Kabel in seiner Axialposition zu fixieren, und
- durch die Vorschub-, bzw. Rückzugseinrichtung (26, 33, 47) die konischen Schrägflachen (13, 17) axial betätigbar sind.

2. Vorrichtung nach Anspruch 1, dadurch gekennzeichnet, dass die Schrägfläche (17) für die Steuerung der Zentrierbacken (9) selbsthemmend ausgebildet ist.

3. Vorrichtung nach Anspruch 1 oder 2, dadurch gekennzeichnet, dass an jeder Schrägfläche (13 bzw. 17) der eine Arm eines zweiarmigen, starren Hebels (5 bzw. 6) anliegt, dessen anderer Arm den jeweils an die Oberfläche des Leiters (10) heranzuführenden Teil (8 bzw. 9) trägt, wobei zweckmässig die Hebel (5, 6) in unmittelbar nebeneinander liegenden — gegebenenfalls koaxialen — Drehlagern (4, 4') angeordnet sind.

4. Vorrichtung nach einem der vorangehenden Ansprüche, dadurch gekennzeichnet, dass jedes Messer (Fig. 5 : 8') den einen Schenkel einer U-förmig ausgebildeten Zentrierbacke (9') umgreift, in deren anderem Schenkel der Hebel (5) gelagert ist, wobei die Schneidkante des Messers (8') vorzugsweise an der — vom Ende des Leiters (10) aus gesehen — hinteren Messerfläche angeordnet ist.

5. Vorrichtung nach einem der vorangehenden Ansprüche, dadurch gekennzeichnet, dass die dem jeweiligen Leiter (10) zugekehrten Halteflächen (Fig. 4 : 31, 32) der Zentrierbacken (9) eben oder höchstens dem grössten vorkommenden Leiterdurchmesser entsprechend konkav gekrümmt sind und gegebenenfalls — gesehen in Drehrichtung (64) — vorne einen im wesentlichen glatten Abschnitt (31) und anschliessend einen rauhen, vorzugsweise quer zu Drehrichtung (64) gezahnten, Abschnitt (32) besitzen, wobei zweckmässig der glatte Abschnitt (31) sich von einer Seite her über eine die Achsen des Leiters (10) und der Zentrierbacke (9) in der Bewegungsrichtung durchquerende Ebene (65) hinaus erstreckt.

6. Vorrichtung nach einem der vorangehenden Ansprüche, dadurch gekennzeichnet, dass der Drehantrieb (2, 3, 24, 25) und/oder die Betätigungseinrichtung (14-16, 34, 13 bzw. 17,6 bzw. 5) — wenn letztere, dann zumindest für einen Teil des Weges — für das (die) Messer (8) und die Zentrierbacken (9) gemeinsam ist (sind).

7. Vorrichtung nach Anspruch 3 und 6, dadurch gekennzeichnet, dass der Drehantrieb (2, 3, 24, 25) über eine Hohlwelle (2) erfolgt, die koaxial mit einem die Schrägflächen (13, 17) betätigenden Schubrohr (12) und mit der einen Anschlag (20) für den heranzuführenden Leiter (10) tragenden Stange (19) angeordnet ist, wobei die Hohlwelle (2) und/oder das Schubrohr (12) und/oder die Stange (19) gegenüber den Spannbacken (11) axial verschiebbar gelagert sind.

8. Vorrichtung nach einem der vorangehenden Ansprüche, dadurch gekennzeichnet, dass ein Fühler (20, 19, 80, 23) für das Erreichen einer vorbestimmten Position durch den Leiter (10) vorgesehen ist, durch welchen Fühler ein Programmwerk (72) einschaltbar ist, das wenigstens eine Auslöseeinrichtung (30) für Halteelemente, insbesondere Spannbacken (11) für den Leiter (10) umfasst, und wobei der Fühler einen — vorzugsweise in der Nähe der Nullage der Messer (8) angeordneten — Anschlag (20) und einen unter dem Einfluss des Leiteranschlages an diesen ein Signal an das Programmwerk (72) abgebenden Sensor (23) für den Rückzug des Anschlages (20) umfasst.

9. Vorrichtung nach Anspruch 8, dadurch gekennzeichnet, dass durch das Programmwerk (72) ausserdem die Vorschub- bzw. Rückzugseinrichtung (26, 33, 47) für die Messer (8) und die Zentrierbacken (9) auf eine/von einer — insbesondere über einen Sollwertgeber (73) einstellbare — Abisolierlänge betätigbar ist, welch letztere durch einen Istwertgeber (71) messbar ist.

## Claims

1. Apparatus for removing at least one layer (60-62) of the sheath of electric conductors or light guides (10),
- having a stop (20) for the conductor (10) introduced,
- having at least one stripping knife (8) rotatable about the axis of the conductor (10) for cutting through the one or more layers (60-62) surrounding the said conductor
- having an actuating means (14-16, 34) which adjusts the stripping knife or knives (8) to the desired cutting depth, the said knife or knives being guided through positive interlocking over a first conical inclined surface (13), in which
- the conductor (10) is capable of being centred and fixed with the aid of centring jaws (9) which are arranged directly adjacent to the knife or knives (8) and can be moved radially into contact with the sheath of the conductor (10) by an actuating means (18, 17, 5) which acts through frictional contact ;
- the centring jaws (9) in the position in which they are placed against the conductor (10) are fixed through positive interlocking by means of at least one second conical inclined surface (17) ;
- the stripping knife or knives (8) is or are displaceable at least along the following part of its radial path, regardless of the centring jaws (9) fixed in this manner ;
- a feed or retracting means (26, 33, 47) for the knife or knives (8) and the centring jaws (9) is adjustable to the particular desired stripping length ;
- clamping jaws (11) are provided in order to fix the cable in its axial position, and
- the conical inclined surfaces (13, 17) can be actuated axially by the feed or retracting means (26, 33, 47).

2. Apparatus according to Claim 1, characterized in that the inclined surface (17) for controlling the centring jaws (9) is designed to be self-locking.

3. Apparatus according to Claim 1 or 2, characterized in that one arm of a two-armed, rigid lever (5 or 6) rests against each inclined surface (13 or 17), the other arm of the said lever carrying the part (8 or 9) leading to the surface of the conductor (10), the levers (5, 6) expediently being arranged in directly adjacent — optionally coaxial — pivot bearings (4, 4').

4. Apparatus according to any of the preceding Claims, characterized in that each knife (Fig. 5 : 8') surrounds one limb of a U-shaped centring jaw (9'), in the other limb of which the lever (5) is mounted, the cutting edge of the knife (8') preferably being arranged on the rear knife surface — viewed from the end of the conductor (10).

5. Apparatus according to any of the preceding Claims, characterized in that those holding surfaces (Fig. 4 : 31, 32) of the centring jaws (9) which face the particular conductor (10) are flat or at most have a concave curvature corresponding to the largest conductor diameter encountered, and, if required, possess — viewed in the direction of rotation (64) — first an essentially smooth section (31) and then a rough section (32) which is preferably toothed transversely to the direction of rotation (64), the smooth section (31) expediently extending from one side beyond a plane (65) through the axes of the conductor (10) and of the centring jaw (9) in the direction of movement.

6. Apparatus according to any of the preceding Claims, characterized in that the rotary drive (2, 3, 24, 25) and/or the actuation means (14-16, 34, 13 and 17, 6 and 5) — in the case of the latter, at least for part of the distance — is or are common to the knife or knives (8) and the centring jaws (9).

7. Apparatus according to Claims 3 and 6, characterized in that the rotary drive (2, 3, 24, 25) is effected via a hollow shaft (2) which is arranged coaxially with a push rod (12) actuating the inclined surfaces (13, 17) and with the rod (19) carrying a stop (20) for the conductor (10) to be inserted, the hollow shaft (2) and/or the push rod (12) and/or the rod (19) being mounted so that they are axially displaceable with respect to the clamping jaws (11).

8. Apparatus according to any of the preceding Claims, characterized in that a detector (20, 19, 80, 23) to detect when a predetermined position is reached by the conductor (10) is provided, which detector can switch on a controller (72) which comprises at least one triggering means (30) for holding elements, in particular clamping jaws (11) for the conductor (10), and the detector comprises a stop (20) — preferably arranged in the vicinity of the zero position of the knives (8) — and a sensor (23) which gives a signal to the controller (72) when the conductor strikes the said stop and is intended to retract the stop (20).

9. Apparatus according to Claim 8, characterized in that, in addition, the feed and retracting means (26, 33, 47) for the knives (8) and the centring jaws (9) can be actuated through the controller (72) over/from a stripping length — which in particular can be set via a set-point adjuster (73) — the said stripping length being measurable by means of a feedback transmitter (71).

## Revendications

1. Dispositif pour enlever au moins une couche (60-62) du gainage enveloppant des conducteurs (10) électriques ou des conducteurs (10) de la lumière, ce dispositif comportant :

une butée (20) pour le conducteur (10) introduit dans le dispositif,

au moins un couteau (8) de dénudage, pouvant tourner autour de l'axe du conducteur (10) pour fendre l'une au moins des couches (60-62) entourant ce conducteur,

un dispositif (14-16, 34) d'actionnement, qui règle le ou les couteau(x) (8) de dénudage, par l'intermédiaire d'un guidage forcé par une première surface inclinée (13) conique, par concordance de forme, à la profondeur de coupe voulue, dispositif dans lequel

le conducteur (10) est fixé en étant centré à l'aide de mâchoires (9) de centrage, disposées au voisinage immédiat du ou des couteau(x) (8) et qu'un dispositif (18, 17, 5) d'actionnement, à effet commandé directement, peut mettre radialement en appui sur le gainage enveloppant le conducteur (10) ;

les mâchoires (9) de centrage peuvent, dans leur position d'application sur le conducteur (10), être fixées par concordance de forme à l'aide d'au moins une seconde surface inclinée (17) conique ;

le ou les couteau(x) (8) de dénudage peut ou peuvent être déplacé(s), au moins sur la partie suivante de leur trajet radial, indépendamment des mâchoires (9) de centrage ainsi fixées ;

un dispositif (26, 33, 47) d'avance ou de recul du ou des couteau(x) (8) et des mâchoires (9) de centrage est réglable sur la longueur de dénudage souhaitée à chaque fois ;

des mâchoires (11) de serrage sont prévues pour fixer le câble dans sa position axiale ; et

les surfaces inclinées (13, 17) coniques sont actionnables axialement par le dispositif (26, 33, 47) d'avance ou de recul.

2. Dispositif selon la revendication 1, caractérisé en ce que la surface inclinée (17) est réalisée de manière à pouvoir se bloquer d'elle-même pour la commande des mâchoires (9) de centrage.

3. Dispositif selon la revendication 1 ou 2, caractérisé en ce qu'un bras d'un levier (5 ou 6) rigide à deux bras s'appuie sur chaque surface inclinée (13 ou 17), cependant que l'autre bras porte la partie (8 ou 9) à rapprocher à chaque fois de la surface du conducteur (10), les leviers (5, 6) étant avantageusement montés dans des coussinets (4, 4') de pivotement immédiatement voisins l'un de l'autre et éventuellement coaxiaux.

4. Dispositif selon l'une des revendications précédentes, caractérisé en ce que chaque couteau (8) entoure une branche d'une mâchoire (9') de centrage en U dans l'autre branche de laquelle le levier (5) est monté, l'arête coupante du couteau (8) étant avantageusement disposée sur la surface arrière de couteau, quand on regarde l'extrémité du conducteur (10).

5. Dispositif selon l'une des revendications précédentes, caractérisé en ce que les surfaces (31, 32) (figure 4) de maintien, tournées vers le conducteur (10) en cause, des mâchoires (9) de centrage sont planes ou tout au plus ont une concavité correspondant au plus grand diamètre du conducteur devant arriver et possèdent éventuellement à l'avant, quand on regarde dans la direction (64) de rotation, un tronçon (31) essentiellement lisse puis un tronçon (32) rugueux, avantageusement denté transversalement à la direction (34) de rotation, le tronçon (31) lisse s'étendant avantageusement d'un côté sur un plan (65) coupant les axes du conducteur (10) et les mâchoires (9) de centrage dans la direction du mouvement.

6. Dispositif selon l'une des revendications précédentes, caractérisé en ce que l'entraînement en rotation (2, 3, 24, 25) et/ou le dispositif d'actionnement (14 à 16, 34, 13 ou 17, 6 ou 5), dans ce dernier cas, au moins sur une partie du trajet, est ou sont commun(s) au couteau (8) et aux mâchoires (9) de centrage.

7. Dispositif selon les revendications 3 et 6, caractérisé en ce que l'entraînement en rotation (2, 3, 24, 25) s'effectue à l'aide d'un arbre creux (2), qui est monté coaxial avec un tube (12) d'arbre de transmission actionnant les surfaces inclinées (13, 17) et avec la tige (19) portant une butée (20) pour le conducteur (10) à acheminer jusque-là, l'arbre creux (2) et/ou le tube (12) et/ou la tige (19) étant monté(s) de façon à pouvoir coulisser axialement par rapport aux mâchoires (11) de serrage.

8. Dispositif selon l'une des revendications précédentes, caractérisé en ce qu'il est prévu un détecteur (20, 19, 80, 23) du fait que le conducteur (10) atteint une position prédéterminée, ce détecteur pouvant enclencher un mécanisme (72) programmé, comprenant au moins un dispositif (30) de déclenchement d'éléments de maintien, en particulier des mâchoires (11) de serrage du conducteur (10), et ce détecteur comportant une butée (20), disposée avantageusement au voisinage de la position zéro du couteau (8), et un palpeur (23) émettant, sous l'influence du choc du conducteur contre la butée, un signal en direction du mécanisme (72) programmé, pour le retrait de la butée (20).

9. Dispositif selon la revendication 8, caractérisé en ce que le mécanisme programmé (72) peut en outre actionner le dispositif (26, 33, 47) destiné à faire avancer ou reculer le couteau (8) et les mâchoires (9) de centrage sur une/d'une longueur de dénudage, réglable en particulier par l'intermédiaire d'un émetteur (73) de valeur de consigne, la longueur de dénudage étant avantageusement mesurable à l'aide d'un émetteur (71) de valeur réelle.

Fig.1

Fig.2

0 195 932

0 195 932

Fig. 3

Fig. 4

Fig. 5 a

Fig. 5 b

2